# EUROPÄISCHE PATENTSCHRIFT

(11) **EP 2 382 516 B1**
(45) Veröffentlichungstag und Bekanntmachung des Hinweises auf die Patenterteilung: **10.07.2013**
(21) Anmeldenummer: 09783947.6
(22) Anmeldetag: 12.10.2009
(51) Int. Cl.: A01D 34/00

(54) **VERFAHREN UND SYSTEM ZUR ARBEITSBEREICHSERKENNUNG EINES MOBILEN ARBEITSGERÄTES**
METHOD AND SYSTEM FOR RECOGNIZING THE WORKING RANGE OF A MOBILE TOOL
PROCÉDÉ ET SYSTÈME DE DÉTECTION DE LA ZONE DE TRAVAIL D'UN APPAREIL DE TRAVAIL MOBILE

(30) Priorität: 20.10.2008 DE 102008042948; 26.03.2009 DE 102009001900
(43) Veröffentlichungstag der Anmeldung: 02.11.2011
(73) Patentinhaber: Robert Bosch GmbH, 70442 Stuttgart (DE)
(72) Erfinder: PETEREIT, Steffen, 71691 Freiberg A. N. (DE); ALBERT, Amos, 71229 Leonberg (DE); DIETZEL, Friederike, 70439 Stuttgart (DE)
(86) Internationale Anmeldenummer: PCT/EP2009/063268
(87) Internationale Veröffentlichungsnummer: WO 2010/046260

(56) Entgegenhaltungen:
- EP-A1- 1 906 205
- EP-A2- 1 898 289
- WO-A2-2007/109627

## Beschreibung

### Stand der Technik

Die Erfindung geht aus von einem Verfahren zur Arbeitsbereichserkennung eines mobilen Arbeitsgerätes, insbesondere einer automatisch oder halbautomatisch arbeitenden Bodenbearbeitungsmaschine nach dem Oberbegriff des Anspruchs 1. Des Weiteren betrifft die Erfindung ein System, welches nach diesem Verfahren arbeitet

Automatisch oder halbautomatisch arbeitende Bodenbearbeitungsmaschinen (z.B. Rasenmäher) sind seit langer Zeit bekannt. Die Begrenzung der Arbeitsfläche, die nicht verlassen werden darf, kann durch einen stromdurchflossenen Leiter erfolgen. Das resultierende elektrische bzw. magnetische Feld kann durch Sensoren auf dem fahrenden Arbeitsgerät derart detektiert werden, dass das Gerät bei Annäherung an die Arbeitsfeld-Begrenzung wendet oder rückwärts fährt, in jedem Fall aber das Arbeitsfeld nicht verlässt.

In einer einfachsten Ausführung wird der Begrenzungsdraht von einem elektrischen Wechselstrom durchflossen, in Detektionsspulen auf dem fahrenden Arbeitsgerät wird eine Spannung induziert. Bei Annäherung an den stromdurchflossenen Leiter steigt die Feldstärke stark an, bei Erreichen einer festgelegten Schwelle wird gewendet bzw. die Fahrtrichtung umgedreht.

(Begrenzung einer Arbeitsfläche für fahrende Arbeitsgeräte u.a.: US 3 550 714 /US 3 570 227 (beide 1964); Führung eines fahrenden Gerätes entlang eines stromdurchflossenen Leiters u.a.: US 549 674 (1940), US 3 407 895 (1964), DE 1 613 991 (1968), DE 1902 037 (1969)).

Das große Problem dieser einfachen Systeme mit Signalstärkenmessung ist jedoch, dass nicht detektiert werden kann, auf welcher Seite des stromdurchflossenen Leiters sich die Detektionsspule befindet, d.h. ob sich das Arbeitsgerät innerhalb oder außerhalb der begrenzten Arbeitsfläche befindet. Wohl findet im Moment des Überquerens des Einfassungsdrahtes eine Phasendrehung/Phasenverschiebung statt, aber diese Phasenverschiebung kann nicht statisch detektiert werden, d.h. es kann nicht zu jeder Zeit festgestellt werden, ob sich das Gerät innerhalb oder außerhalb der Arbeitsfläche befindet.

Um diesen Mangel zu beheben wurden diese Systeme weiterentwickelt. Zum Beispiel wurde der Einfassungsdraht mit Strömen mit 2 oder mehr Frequenzen gespeist. Wenn z.B. die Frequenzen vielfache voneinander sind sowie deren zeitliche Beziehung zueinander bekannt ist, kann anhand des Summensignals ermittelt werden, ob sich das Arbeitsgerät innerhalb oder außerhalb der Arbeitsfläche befindet (Begrenzung einer Arbeitsfläche für fahrende Arbeitsgeräte u.a.: WO 90/00274 (1989), EP 1 025 472 (1998), EP 1 047 983 (1998); Führung eines fahrenden Gerätes entlang eines stromdurchflossenen Leiters u.a.: DE 2 228 659 (1972); generelle Detektion der Lage zu einem stromdurchflossenen Leiter u.a.: US 3 299 351 (1964), US 5 438 266 (1993)).

Die EP 1 470 460 (2003) beschreibt ein System, das in begrenztem Umfang in der Lage ist, zu detektieren, ob sich die Detektionsspule an einem fahrenden Arbeitsgerät innerhalb oder außerhalb eines stromdurchflossenen Begrenzungsdrahtes befindet. Dazu wird die Amplitude der jeweils aktuell detektierten Signale mit der von vorherigen, sich in einem Speicher befindlichen Signalen verglichen. Ein Mikroprozessor führt eine numerische Analyse durch um die Anzahl der Messungen zu ermitteln, die notwendig sind um einen Schwellwert zu erreichen und die ein Maß für den Abstand zum Begrenzungsdraht darstellen. Die Ergebnisse der Analyse werden jeweils in einer Speicherzelle abgelegt und stehen eine begrenzte Zeit zur Verfügung (bis der Wert der Speicherzelle erneut überschrieben wird). Die Gesamtheit der Speicherzellen bildet die Form des Signals ab. Eine numerische Analyse der Form der Welle ermöglicht es, einen Phasenwechsel (bei Überqueren des Einfassungsdrahtes) zu detektieren. Als weitere Möglichkeit, ein Überqueren des Drahtes zu detektieren wird die Möglichkeit genannt, dass die Signale zweier Detektionsspulen (z.B. vorne und hinten am Fahrzeug) verglichen werden. Dadurch kann eine Phasenverschiebung durch Überqueren des Drahtes vorne oder hinten detektiert werden.

Die nach o.g. Verfahren ermittelte Information innen/außen steht nicht ständig zur Verfügung (z.B. wenn der Inhalt der Speicherzellen erneut überschrieben wird bzw. wenn die zweite Spule den Draht ebenfalls überquert hat).

Die EP 1 512 053 (2003) beschreibt ein System, bei dem der Begrenzungsdraht nicht von sinusförmigen Wechselströmen durchflossen wird, sondern von periodischen, wohl definierten Stromimpulsfolgen. Auf den ersten Stromimpuls, der nach einer längeren Zeitphase ohne Signal empfangen wird, erfolgt die Triggerung der Auswertung auf dem fahrenden Arbeitsgerät. Es erfolgt dann eine Zeitauswertung der in Spannungssignalen umgewandelten Stromimpulse. Aus diesen lässt sich dann eindeutig die Information ableiten, wonach sich das Arbeitsgerät innerhalb oder außerhalb der begrenzten Arbeitsfläche befindet.

EP 1 906 205 (2007) beschreibt ein ähnliches Verfahren, bei dem das Signal mindestens einen positiven und einen negativen Impuls innerhalb eines definierten Zeitintervalls enthalten muss.

Alle der bisher vorgestellten Systeme, die auch statisch (d.h. im Stillstand des Arbeitsgerätes, nach mutwilliger Umplatzierung des Arbeitsgerätes oder nach Anschalten des Gerätes außerhalb der vom Einfassungsdraht umschlossenen Arbeitsfläche) die Zuordnung innen/außen ermöglichen, arbeiten entweder mit Strömen von zwei oder mehr Frequenzen auf dem Einfassungsdraht oder mit einer Stromimpuls-getriggerten Zeitauswertung der Signale auf dem Draht.

In EP 1 612 631 (2004) wird ein System beschrieben, das eine Auswertung innen/außen ohne Stromimpuls-Triggersignal vornehmen kann. Bei diesem System ist es jedoch zwingend notwendig, das Arbeitsgerät innerhalb der Arbeitsfläche einzuschalten. Nach Einschalten des Arbeitsgerätes wird eine sich auf dem Arbeitsgerät befindliche Uhr mit dem Signal des Einfassungsdrahtes synchronisiert. Nach dieser Synchronisierung hält das Arbeitsgerät diese synchronisierte Zeitbasis und kann Phasenwechsel durch Überqueren des Drahtes detektieren. Weitere Synchronisierungen der internen Uhr mit dem Signal auf dem Einfassungsdraht während des Arbeitszyklusses sind nicht vorgesehen. Das Signal auf dem Einfassungsdraht muss ein sauberes Sinussignal einer Frequenz sein.

In EP 1 898 289 A2 wird ein System zur Steuerung eines Flächenbearbeitungsgeräts offenbart. Das System weist einen Befehlssatz mit parametrisierbaren Befehlen auf. Zur Steuerung des Flächenbearbeitungsgeräts ist eine Leiterschleife vorgesehen, die von dem Flächenbearbeitungsgerät detektierbar ist und anhand deren sich das Flächenbearbeitungsgerät orientiert.

In WO 2007/109627 A2 wird ein autonomer Rasenmäher mit einem Sensor zur Detektierung einer Mähkante zwischen einem gemähten Bereich und einem ungemähten Bereich offenbart. Der autonome Rasenmäher detektiert mittels des Sensors die Mähkante und folgt dieser.

In EP 1 906 205 A1 wird ein System offenbart, das einen Roboter umfasst, der einen begrenzten Raum anhand eines einprogrammierten Fahrtmusters abfährt. Der Raum (24) ist mittels einer Leiterschleife (27) begrenzt, so dass der Roboter Grenzen des Raums detektieren kann.

### Aufgabe der Erfindung

Die der Erfindung zugrunde liegende Aufgabe besteht darin, ein Verfahren zur Eingrenzung einer Arbeitsfläche für ein autonomes oder halbautonomes Arbeitsgerät zu verbessern und eine sichere und zuverlässige statische Detektion des Arbeitsgerätes (AG) zu ermöglichen.

### Offenbarung der Erfindung

### Vorteile der Erfindung

Erfindungsgemäß wird vorgeschlagen, das die Eingrenzung einer Arbeitsfläche für ein autonomes oder halbautonomes Arbeitsgerät durch die Kombination mindestens eines von einer, eine Arbeitsfläche umgrenzenden Leiterschleife emittierten Signals mit mindestens einem, eine Zeitinformationen liefernden Funksignal erreicht wird. Dies wird erreicht durch eine zeitliche Synchronisation bzw. den Bezug auf eine gemeinsame Zeitbasis. Hierbei wird zumindest ein externes Synchronisationssignal in einem festen Zeitbezug zu einem Signal I, insbesondere einem Stromsignal, mit dem die elektrische Leiterschleife beaufschlagt wird ausgesendet. Hierdurch wird das zumindest eine externe Synchronisationssignal zur Synchronisierung einer Detektion des Arbeitsgerätes, insbesondere zur Synchronisierung einer Signalauswertung des Arbeitsgerätes zur Detektion der Einfassung genutzt. Es ist somit zu jeder Zeit detektierbar, ob sich das Arbeitsgerät innerhalb oder außerhalb der umgrenzten Arbeitsfläche befindet, dies gift insbesondere auch bei Einschalten des Gerätes außerhalb der Arbeitsfläche.

Insbesondere werden Verfahren zur sicheren Detektion des Innen- und Außenbereiches der Arbeitsfläche beschrieben.

Das erfindungsgemäße System dient der Eingrenzung einer Arbeitsfläche (AF) für ein mobiles autonomes oder halbautonomes Arbeitsgerät (AG). Systemmerkmal dieser Erfindung ist die Kombination von durch von einem oder mehreren stromdurchflossenen Leiter(n) emittierten Signalen mit mindestens einem weiteren, drahtlos übermittelten Signal. Dieses Signal wird zur Synchronisierung der Signalauswertung benötigt und kann emittiert werden
- von der Basisstation und ggf. damit verbundenen Slave-Sendern
- vom Arbeitsgerät
- von einer externen Instanz.

Weitere Vorteile der Erfindung sind:
sichere statische Detektion, ob sich Arbeitsgerät innerhalb/außerhalb der abgegrenzten Arbeitsfläche befindet (d.h. funktioniert auch im Stillstand des Arbeitsgerätes oder nach mutwilliger Umplatzierung des Arbeitsgerätes oder nach Anschalten des Arbeitsgerätes außerhalb der Umgrenzung der Arbeitsfläche)
wenig abhängig von der vom stromdurchflossenen Leiter tatsächlich emittierten Feldstärke (z.B. durch Verlegen des Drahtes in unterschiedlicher Tiefe, unterschiedliche Entfernungen des Arbeitsgerätes vom Einfassungsdraht)
bei Verwendung zeitlich begrenzter gepulster Signale auf der umgrenzenden Leiterschleife kann ein geringer Stromverbrauch realisiert werden (Impulsprinzip)

Bei einigen Ausführungsvarianten Zusatznutzen wie Erhöhung der Ortungsgenauigkeit des Arbeitsgerätes, Vereinfachung der Homingfunktion (z.B. Rückkehr des Gerätes zur Ladestation), (ggf. bidirektionale) Kommunikation zwischen Ladestation und Arbeitsgerät (z.B. zur Übermittlung von Befehlen) möglich.

Bei einigen Ausführungsformen müssen die durch die umgrenzende Leiterschleife fließenden Ströme keine Komponenten mit mehreren Frequenzen enthalten.

Bei einigen Ausführungsformen müssen die durch die umgrenzende Leiterschleife emittierte Signale nicht unbedingt periodisch sein und müssen keine harmonische Komponente beinhalten

Bei einigen Ausführungsformen können relativ einfache Auswerteelektroniken verwendet werden.

Bei einigen Ausführungsformen ist nicht zwingend eine Zeitauswertung

### Zeichnung

In der Zeichnung sind Ausführungsbeispiele bzw. Varianten für das erfindungsgemäße Verfahren bzw. ein erfindungsgemäßes System dargestellt. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Es zeigen:
- Figur 1: Systemkomponenten für zwei Varianten A bzw. B des erfindungsgemäßen Systems,
- Figur 2: ein erfindungsgemäßes System zur Verdeutlichung von "innen" und "außen" eines Arbeitsbereichs anhand einer geschlossene Leiterschleife (Einfassungsdraht),

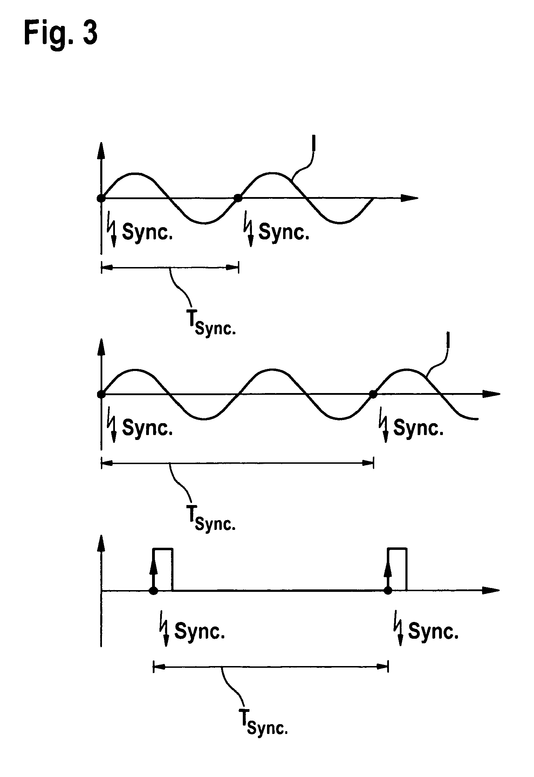

- Figur 3: Varianten der Generierung des Synchronisationssignal Sync,

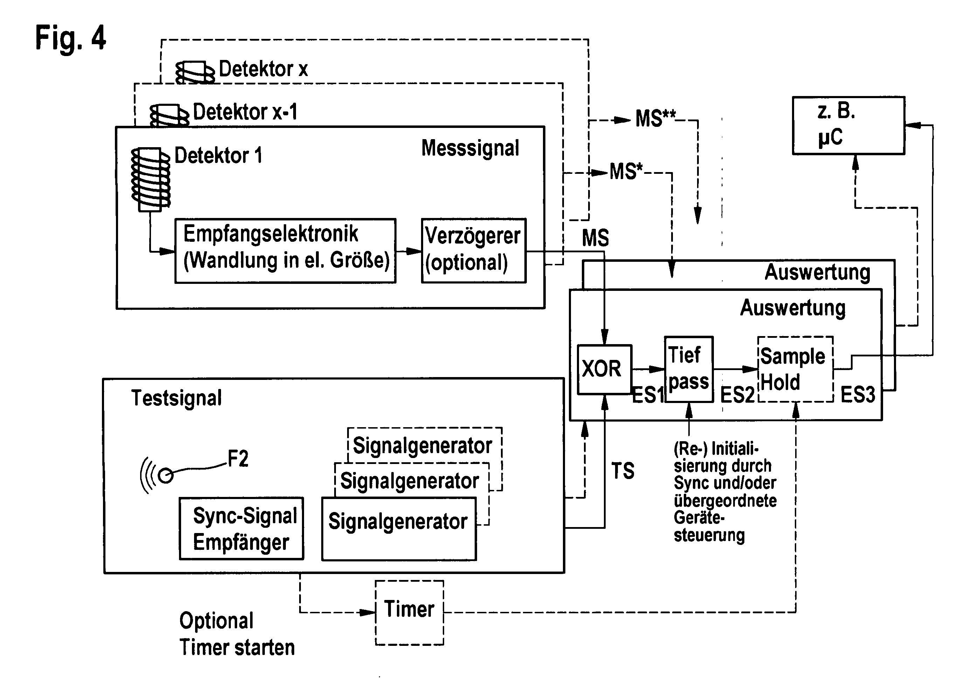

- Figur 4: Mögliche Komponentenkonstellation auf dem Arbeitsgerät (AG) des Systems,
- Figur 5: Signalfolgen MS zur Verdeutlichung der möglichen Vorverarbeitungsarten für Stromsignale auf dem Einfassungsdraht des Systems,

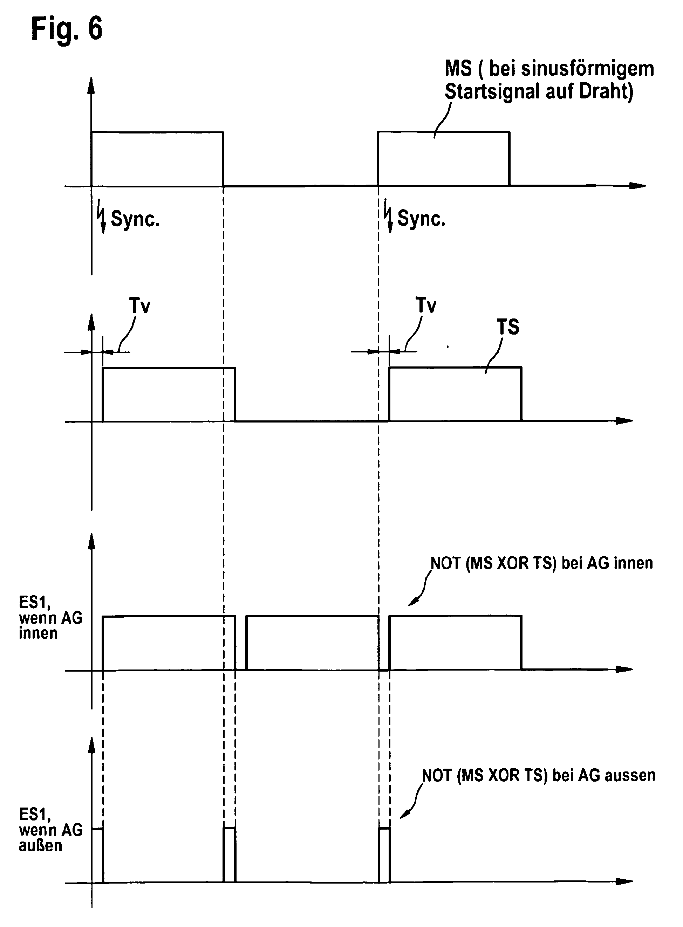

- Figur 6: Signalfolgen zur Generierung des Ergebnissignals ES1 aus dem Messsignal MS und dem Testsignal TS,

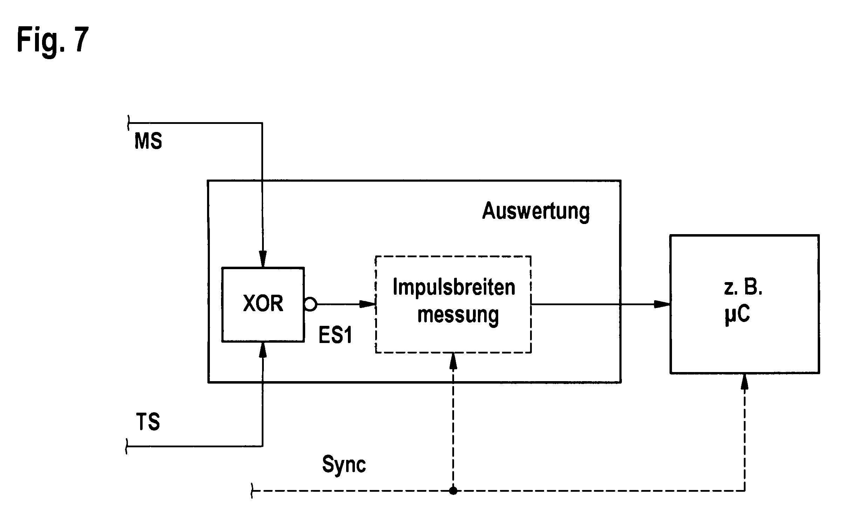

- Figur 7: Darstellung des AUSWERTUNG - Blocks zur Messung der Impulsdauer von ES1,

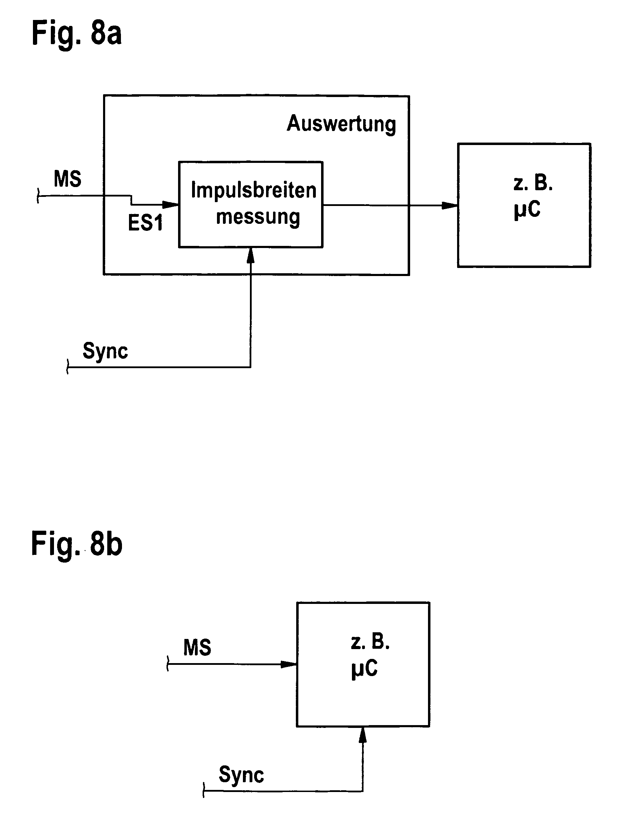

- Figur 8: Darstellung des Blocks AUSWERTUNG für eine alternative Ausführungsform gemäß Variante A2,

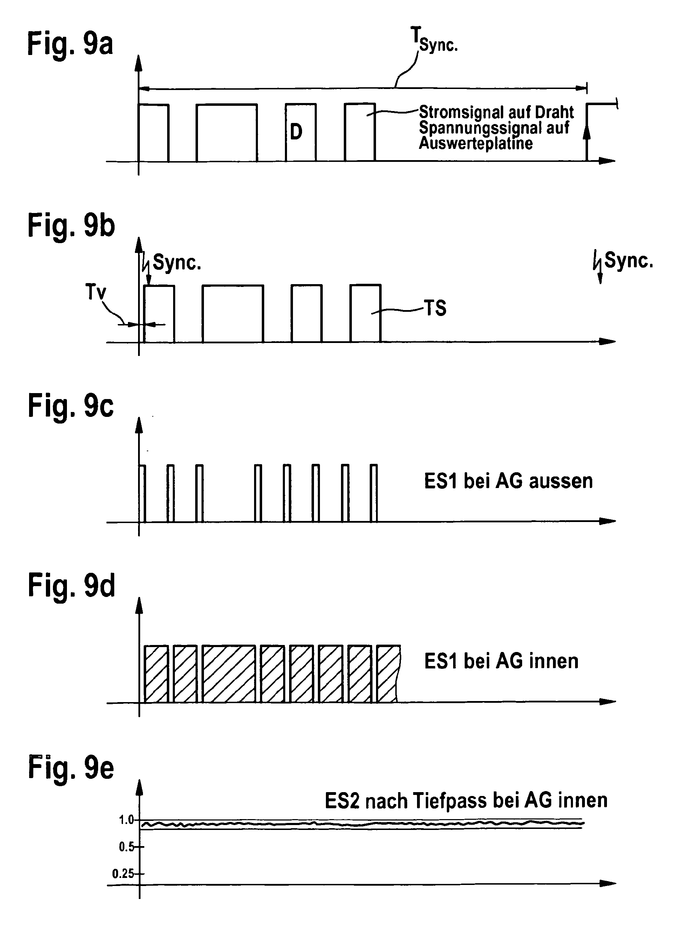

- Figur 9: Signalfolgen bei der Variante A1 zur Messung der Impulsdauer von ES1 bei einer Rechteckimpulsfolge auf dem Einfassungsdraht,

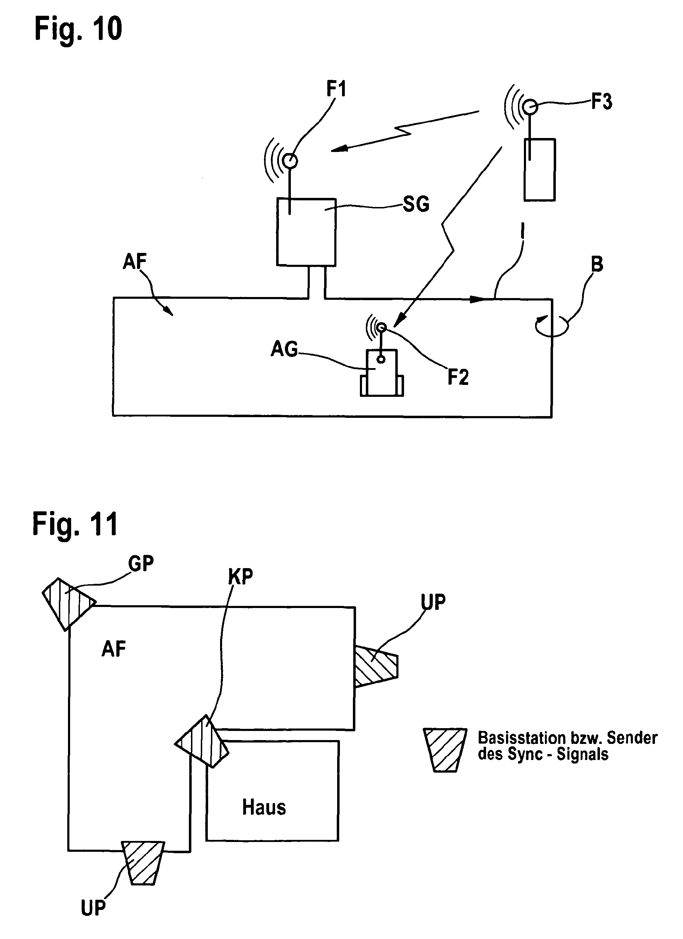

- Figur 10: Das erfindungsgemäße System in einer alternativen Ausführungsform gemäß Variante C1, bei der ein weiterer Teilnehmer zu definierten Zeitpunkten das Aussenden der Einfassungsdrahtsignals durch SG sowie den Messprozess auf dem AG initiiert,
- Figur 11: Eine schematische Darstellung der Arbeitsfläche zur Verdeutlichung der Anordnung des Senders des Sync-Signals des erfindungsgemäßen Systems,

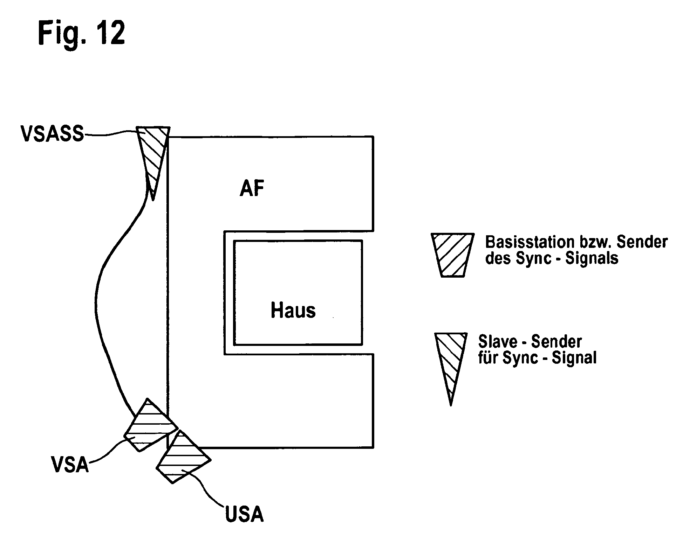

- Figur 12: Eine schematische Darstellung einer alternativen Arbeitsfläche zur Verdeutlichung der verbesserten Anordnung des Senders des Sync-Signals des erfindungsgemäßen Systems.

### Beschreibung der Ausführungsbeispiele

Das hier vorgestellte System dient der Eingrenzung einer Arbeitsfläche (AF) für ein autonomes oder halbautonomes Arbeitsgerät AG. Systemmerkmal dieser Erfindung ist die Kombination von durch von einem oder mehreren stromdurchflossenen Leiter(n) emittierten Signalen mit mindestens einem weiteren, drahtlos übermittelten Signal

Im Folgenden sind einige alternative Möglichkeiten und Varianten von Auswertungsmöglichkeiten der beiden essentiellen Systembestandteile "Drahtsignal" und "Funksignal" beschrieben.

Es werden dabei einige Möglichkeiten aufgezeigt, diese Signale auszuwerten, die Erfindung beschränkt sich aber nicht auf die genannten Schaltungsbeispiele. Auch können Kombinationen von Varianten genutzt werden.

### VARIANTE A

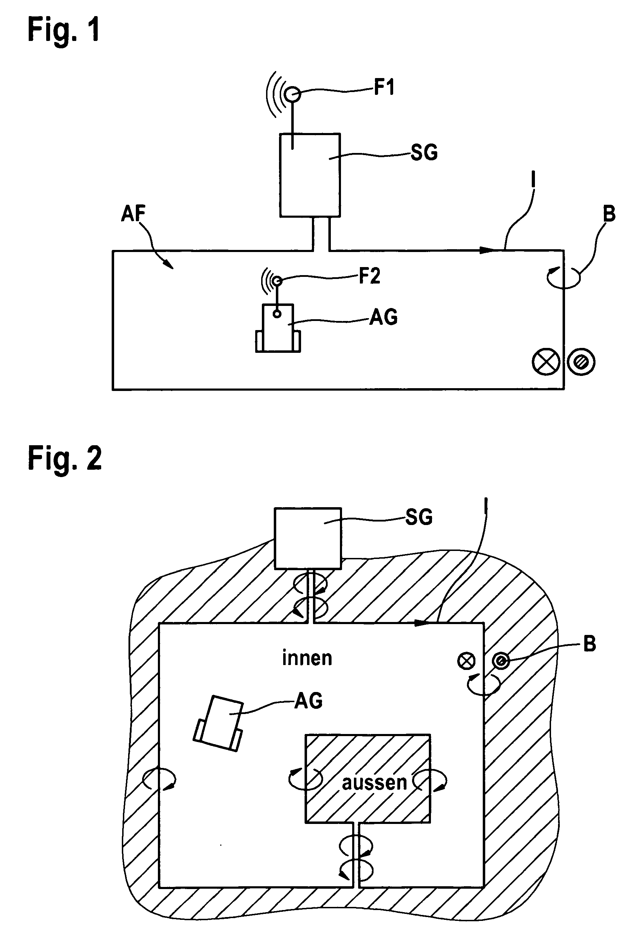

Bei Variante A besteht das Gesamtsystem (siehe Figur 1) aus:

Mindestens einem Signalgenerator SG (typischerweise in der Ladestation integriert), der ein definiertes Stromsignal I generiert und durch eine geschlossene Leiterschleife (Einfassungsdraht) leitet. Diese geschlossene Leiterschleife grenzt eine zu bearbeitende Arbeitsfläche AF derart ein, dass sowohl die Außengrenzen als auch eventuell auszusparende Bereiche (Inseln) damit eindeutig definiert sind. Bild 2 verdeutlicht exemplarisch den Zusammenhang. Fährt man bspw. am Draht in der gezeigten Stromrichtung entlang, so befindet sich der zu bearbeitende Bereich stets rechts davon; linksseitig befinden sich die Außenbereiche.

Ferner verfügt der Signalgenerator SG über mindestens eine Funkschnittstelle F1, über die ein Synchronisationssignal Sync ausgestrahlt werden kann.

Ein autonomes, mobiles Arbeitsgerät AG, das mindestens eine Funkschnittstelle F2 aufweist, sodass das Synchronisationssignal Sync des Signalgenerators SG empfangen werden kann.

Das Aussenden des Signals Sync erfolgt in einem festen Zeitbezug zum Stromsignal I. Beispielsweise könnte bei einer sinusförmigen Stromgröße I das Syncsignal Sync bei einem Nulldurchgang oder dem Scheitelwert ausgesendet werden. Bei einem Rechteckimpuls könnte das Syncsignal Sync bei steigender Flanke ausgesendet werden.

Bild 3 gibt hierzu einige Beispiele indem es Varianten der Generierung des Synchronisationssignal Sync zeigt; Tsync gibt dabei die Periodendauer des Synchronisationssignals an. Es ist vorteilhaft, wenn diese konstant ist, was jedoch keine zwingende Eigenschaft darstellt.

Bild 3 Oben: Sinusförmiges Signal und Generierung des Sync-Signals Sync während der Nulldurchgänge von negativ nach positiv. Ohne Beschränkung der Allgemeinheit könnte das Signal auch bei den Nulldurchgängen von positiv nach negativ oder bei jedem Nulldurchgang erfolgen.

Bild 3 Mitte: Sinusförmiges Signal und Generierung des Sync-Signals Sync nach eine definierten Anzahl von Perioden. Hier im Beispiel nach zwei vollen Schwingungsperioden.

Bild 3 Unten: Impulsförmiges Stromsignal und Generierung des Sync-Signals Sync auf der steigenden Flanke des Signals.

Bild 4 zeigt einige der Komponenten auf dem Arbeitsgerät AG, die für die Signalauswertung benötigt werden, sowie mögliche Komponentenkonstellation auf dem Arbeitsgerät AG. Gestrichelt dargestellte Komponenten sind optional bzw. Vervielfachungen für erweiterte Varianten. Beispielsweise könnte das Abtast-Halteglied (Sample-Hold) in der übergeordneten Gerätesteuerung (z.B. µC) integriert sein.

BLOCK: MESSSIGNAL: Mindestens ein Detektor (Empfängerspule mit nachgelagerter Elektronik), der das durch das Einfassungsdrahtsignal generierte Magnetfeld detektiert und in eine elektrische Größe wandelt. Im Allgemeinen kommt mehr als ein Detektor zum Einsatz, z.B. um den Auftreffwinkel des AG bei Überschreiten der Begrenzung zu ermitteln. Die dafür erforderlichen Komponenten vervielfachen sich entsprechend.

BLOCK: TESTSIGNAL: Eine Funkschnittstelle F2 mit nachgelagerter Signalaufbereitung (Empfänger) zur Detektion des Synchronisationssignals Sync sowie mindestens ein Signalgenerator, der vom Synchronisationssignal Sync getriggert wird und ein definiertes Testsignal TS erzeugt. Durch Einsatz weiterer Signalgeneratoren, die vom gleichen Synchronisationssignals Sync getriggert sind, lässt sich z.B. die Störsicherheit erhöhen (mit entsprechend nachgelagerter Auswertelektronik).

BLOCK: AUSWERTUNG: Auswerteelektronik zur Erkennung des Bereichs (innen/außen) und Weitergabe an übergeordnete Gerätesteuerung, z.B. an einen Mikrocontroller µC. Eine (Re-)Initialisierung der Auswertelektronik (z.B. Nullung des Tiefpaß-Ausganges) kann durch das Synchronisationssignal Sync und/oder die übergeordnete Gerätesteuerung vorgenommen werden. Ebenso kann ein Teil der beschriebenen Auswertung auch in der übergeordneten Gerätesteuerung vorgenommen werden.

### Zu BLOCK MESSSIGNAL:

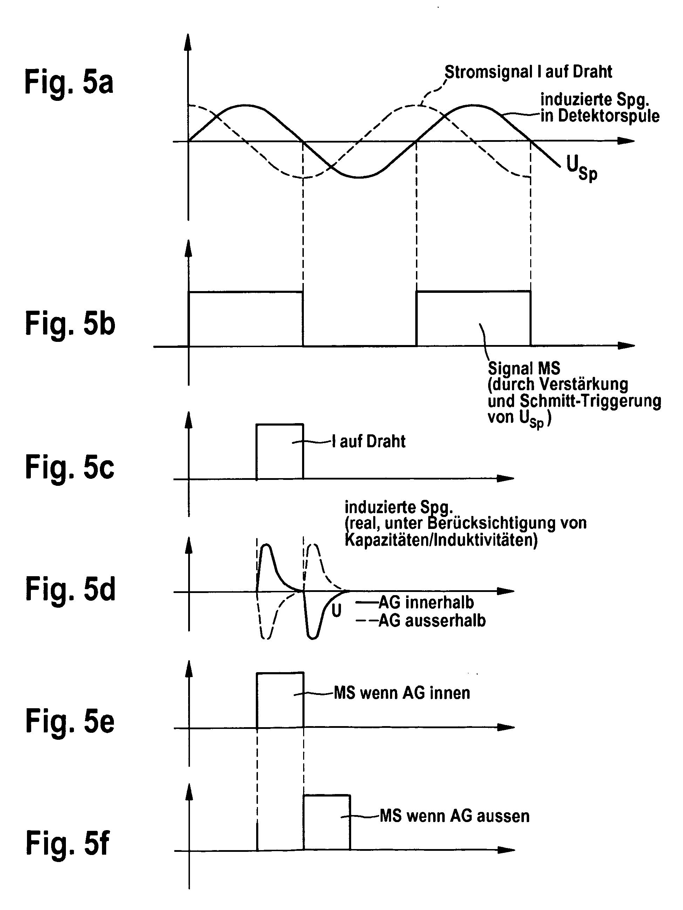

Figur 5 zeigt mögliche Vorverarbeitungsarten für Stromsignale auf dem Einfassungsdraht

Bild 5 (a, b) zeigt eine Variante, bei der ein sinusförmiges Stromsignal mittels Spulen- und Verstärkerschaltung mit anschließender Schmitt-Triggerung ausgewertet wird.
Bild 5 (c - f) zeigt eine Variante, bei der ein Rechteck-Stromimpuls mittels Spulen- und Verstärkerschaltung mit anschließender Schmitt-Triggerung ausgewertet wird.

Ergebnis in allen Fällen (Sinussignal / (Rechteck-)Impulssignal / (Rechteck-) Impulsfolge) ist ein reckteckförmiges Ausgangssignal MS. Im Falle des Rechteck-Stromimpulses lassen sich bei geeigneter Signalform aus der Impulsdauer des verarbeiteten Signals MS (Abklingverhalten) Rückschlüsse auf die empfangene Signalstärke und damit auf die Entfernung vom Draht ziehen. Die Auswertung kann über eine Zeitmessung erfolgen.

### Zu BLOCK TESTSIGNAL:

Optional können über das Sychronisationssignal Sync Timer gestartet werden, die einen oder mehrere Messprozesse starten und/oder beenden.

### Zu BLOCK AUSWERTUNG

### Variante A1 für die Auswertung:

Während des Messprozesses erfolgt auf dem Arbeitsgerät (AG) die Generierung mindestens eines zeitlichen Testsignals TS, das so mit dem empfangenen und ggf. weiterverarbeiteten Einfassungsdrahtsignal MS verarbeitet wird, dass sich hieraus eindeutig und zu jedem Zeitpunkt die Polarität des Magnetfeldes erkennen und damit die oben beschriebene Zuordnung innen/außen durchführen lässt.

Bild 6 zeigt ein Beispiel bei Verwendung eines sinusförmigen Stromsignals auf dem Draht, das wie oben beschrieben in eine Rechteckfunktion MS umgewandelt wird. Ferner ist das auf dem AG erzeugte Signal TS dargestellt. Es handelt sich in diesem Beispiel ebenfalls um eine Rechteckfunktion mit derselben (bekannten) Periodendauer des Stromsignals. Im Idealfall sind MS und TS in der Form identisch. Zwischen dem Empfang des Sync-Signals Sync und der Generierung von TS kann jedoch eine u.U. variable Verzögerungszeit Tv auftreten, die aber gegenüber den restlichen Zeiten im Allgemeinen vernachlässigbar ist. In dem gezeigten Beispiel werden zur weiteren Verarbeitung beide Signale einer Exklusiv Oder (XOR) Operation unterzogen und anschließend negiert zum Ergebnissignal ES1. Unter Vernachlässigung von Tv ergibt sich stets der Wert einer logischen ,1', wenn sich das AG innerhalb der Arbeitfläche befindet und andernfalls der Wert einer logischen ,0', wenn sich das AG außerhalb der Arbeitfläche befindet. (Je nach Stromrichtungsfluss bzw. Einbaulage bzw. Wicklungsrichtung etc. können diese Pegel auch invertiert definiert sein.)

Bild 6 zeigt die Generierung des Ergebnissignals ES1 aus dem Messsignal MS und dem Testsignal TS, sowie die Auswirkungen bei Vorhandensein von Tv. Durch eine nachgelagerte Tiefpassfilterung entsteht ES2. Es lassen sich nun geeignete Schwellwerte definieren, aus denen sich die beiden Zustände innen/außen sicher und eindeutig detektieren lassen.

Gemäß Bild 4 (im Block MESSIGNAL) lässt sich optional das Empfangssignal in der Detektoreinheit verzögern und damit Tv kompensieren oder ggf. eine gewünschte Verzögerung Tv gezielt einstellen.

In letzterem Fall kann die Auswertung auch über eine Messung der Impulsdauer von ES1 erfolgen. Dazu ist der Block AUSWERTUNG gemäß Bild 7 auszuführen. Neben einer dedizierten Elektronik zur Impulsbreitenmessung kann diese auch direkt durch eine übergeordnete Gerätesteuerung erfolgen (z.B. µC, im gezeigten Bild 7 würde der Block "Impulsbreitenmessung" entfallen). Optional lässt sich über das Sync-Signal Sync die Messung zu bestimmten Zeitpunkten triggern (in Bild 7 gestrichelt dargestellt).

### Variante A2 für die Auswertung:

In einer weiteren Ausführungsform wird kein Testsignal TS benötigt und es findet direkt die Impulsbreitenauswertung des Messsignals MS statt. Hierbei ist die Triggerung durch das Sync-Signal Sync zwingend erforderlich als Zeitreferenz (siehe Bild 8a).

>

Wie Bild 8b) zeigt, kann die Impulsbreitenauswertung durch eine dedizierte Elektronik oder direkt durch eine übergeordnete Gerätesteuerung erfolgen (z.B. µC).

Bild 9 zeigt eine weitere Ausgestaltung der Variante A1, bei der eine Rechteckimpulsfolge auf dem Draht zum Einsatz kommt. Vorteilhaft ist hierbei der Einsatz eines spezifischen Musters (z.B. in Form eines pseudobinären Signal), um damit z.B. eine Codierung vorzunehmen (Störsicherheit, Verwendung mehrerer Geräte, Diebstahlschutz). Als Auswertungsmöglichkeiten stehen die oben beschriebenen Verfahren zur Verfügung.

### Variante A3 für die Auswertung:

In einer weiteren Ausführungsform gemäß Bild 4 wird auf dem Arbeitsgerät AG keine Testsignale TS generiert und der Messprozess zu diskreten Zeitpunkten durchgeführt. Dazu wird der gezeichnete Timer durch das Sync-Signal Sync aktiviert, der nach Ablauf einer oder mehrerer definierter Zeitdauern das Abtasten des Signals MS triggert und in ES3 zur weiteren Verarbeitung, z.B. durch einen µC ablegt. Die Timerfunktion kann auch vom µC übernommen werden.

### VARIANTE B

Bei Variante B sendet das autonome Arbeitsgerät AG das Synchronisationssignal aus. In diesem Fall findet die Sync-Signal Detektion auf dem Signalgenerator SG statt. Unmittelbar oder definiert zeitlich verschoben erfolgt dann das Aussenden eines definierten Einfassungsdrahtsignals. Dieser Zeitpunkt ist dem AG bekannt, sodass die oben beschriebenen Signalauswertungsvarianten, d.h. Korrelation mit eigens generiertem Signal auf dem AG oder definierte Abtastung des gewandelten Einfassungsdrahtsignals zur Anwendung kommen können.

### VARIANTEN C

Bei Variante C werden sowohl Signalgenerator als auch das autonome Arbeitsgerät AG von einer dritten Instanz zeitlich synchronisiert.

Bei Version C1 der Variante C erfolgt dies durch mindestens einen weiteren Teilnehmer F3 an der Funkkommunikation, der zu definierten Zeitpunkte das Aussenden der Einfassungsdrahtsignals als auch den Messprozess auf dem AG initiiert. Die Auswertung innen/außen kann wie oben beschrieben erfolgen. (Bild 10). Im Indoor-Bereich kann dazu z.B. auf bestehende Netzwerke wie LAN oder Personenrufanlagen zurückgegriffen werden.

Bei Version C2 der Variante C verfügen sowohl Signalgenerator als auch das autonome Arbeitsgerät über die gleiche Zeitbasis, indem sie beide z.B. über einen GPS-Receiver oder einen Funkuhrempfänger (z.B. DCF77) verfügen. Gegebenenfalls findet hinreichend häufig eine Zeitkorrektur der auf dem SG und dem AG laufenden lokalen Uhren statt. Zu wohl definierten Zeitpunkten in der globalen Zeitbasis (gesteuert durch die lokalen Uhren) erfolgt das Aussenden des Einfassungsdrahtsignals und der Start der Signalauswertung auf dem AG.

Einen Zusatznutzen gibt es, wenn sowohl Signalgenerator SG als auch Arbeitsgerät AG mit einem GPS-Modul ausgestattet sind: Das System kann als Differential-GPS-System (DGPS) ausgeführt werden, welches verbesserte Ortungsinformationen liefert (präzisere lokale Ortung und Geschwindigkeitsmessung des AG möglich). Die für die Berechnung der genaueren Information benötigten Korrekturdaten können vom Signalgenerator SG zum Arbeitsgerät AG codiert über das Einfassungsdrahtsignal übermittelt werden.

### VARIANTE D:

Vom Signalgenerator SG wird lediglich ein einfacher Stromimpuls oder eine Stromimpulsfolge erzeugt, was nicht zwingend in einer festen Periode wiederholt werden muss. Gleichzeitig erfolgt durch SG das Aussenden des Sync-Signals, das auf dem AG unmittelbar einen Mess- und Auswerteprozess des Stromimpulses/der Stromimpulsfolge initiiert.

### VARIANTE E

(Ein oder mehrere Slave-Sender zur vollständigen Sendeabdeckung der Arbeitsfläche werden genutzt):

Für Varianten A und B ist eine drahtlose Kommunikation zwischen SG und AG (uni- oder bidirektional) notwendig. Es sind Formen von Arbeitsflächen AF denkbar, bei denen Teile der Arbeitsfläche durch Hindernisse (z.B. Haus, Garage) abgeschattet werden. Die Lage des Senders für das Sync-Signal (i.d.R. die Basisstation) muss dann derart gewählt werden, dass eine Kommunikation mit dem AG in allen Bereichen der Arbeitsfläche gewährleistet ist.

Bild 11 verdeutlicht dies am Beispiel einer L-förmigen Arbeitsfläche AF und der möglichen Lage des Senders des Sync-Signals für die Varianten A und B (GP: geeignete Positionierung, KP: ggf. kritische Positionierung, UP: gegebenenfalls ungeeignete Positionierung).

Bild 12 zeigt eine C-förmige Arbeitsfläche AF und die Sende-Abdeckung für Sync-Signal für diese besonders geformte Arbeitsflächen AF für die Varianten A und B (VSA: vollständige Sende-Abdeckung, USA: gegebenenfalls unvollständige Sende-Abdeckung der Arbeitsfläche). Hierbei ist eventuell eine vollständige Sende-Abdeckung mit nur einem Sender nicht mehr realisierbar. In diesem Fall muss mindestens ein Slave- (=Zweit-)Sender VSASS eingesetzt werden, der in die vom Master-Sender nicht abdeckbaren Bereiche senden kann. Dieser Slave-Sender VSASS kann sowohl über eine Leitung als auch drahtlos (Repeater) mit dem Master-Sender verbunden sein.

### Weitere Ausführungsformen:

Das erfindungsgemäße Verfahren bzw. das erfindungsgemäße System zur Arbeitsbereichserkennung eines mobilen Arbeitsgerätes sind nicht auf die oben beschriebenen Ausführungsformen beschränkt.

In obigen Ausführungen wird in der Regel ein autonomes Arbeitsgerät AG genannt. Ein Begrenzungssystem der beschriebenen Art kann aber auch für den Betrieb eines halbautonomen Arbeitsgerätes Verwendung finden. Dieses kann z.B. ein manuell geschobener Rasenmäher sein, der z.B. das Mähwerk abschaltet, sobald der auf dem Gerät befindliche Detektor den Begrenzungsdraht überquert.

Betrifft Stromimpulse auf der die Arbeitsfläche umgrenzenden Leiterschleife: Wahl Sinus oder Impulsform:
- Sinus ist typischerweise low current, um geringe Verluste zu haben; Vorteil: abgestimmter LC-Schwingkreis auf Empfangseinheit möglich, ergibt zusätzliche Verstärkung des Signals.
- Impulse benötigen höhere Einzelstromstärken, die Leistungsaufnahme kann aber mit Hilfe geringer Impulsbreiten im Verhältnis zur Periodendauer des Signals ebenfalls gering gehalten werden.

Stromsignale auf der die Arbeitsfläche umgrenzenden Leiterschleife können eines oder mehrere der folgenden Charakteristika enthalten:
- kann sinusförmig sein
- können Impulsfolgen sein
- können z.B. auch Dreiecks- oder Sägezahnförmig sein
- können positiven und/oder negativen Anteil enthalten
- können Gleichanteil enthalten
- können mehrere Frequenzen enthalten (müssen aber nicht)
- müssen nicht unbedingt feste Frequenz haben
- können unterschiedliche Amplitude haben

Oben beschriebene Funksignale können auch kodiert sein, z.B. mit Hilfe Amplitudenmodulation, was zu einer Erhöhung der Störsicherheit führt.

Oben beschriebene drahtlose Kommunikation kann z.B. erfolgen über: Funk, Bluetooth, Infrarot, Laser, Wi-Fi

Zusatzfunktionen durch Funkkommunikation: Überragung weiterer Infos, z.B. Absetzen von Befehlen wie "Rückkehr zur Basisstation")

Außer zur Eingrenzung von Arbeitsflächen kann ein System wie oben beschrieben auch zur Führung mobiler (autonomer oder halbautonomer) Geräte verwendet werden (Verfolgen des Drahtes)

Ein Begrenzungssystem nach oben ausgeführter Weise kann z.B. auch für folgende Aufgaben Anwendung finden (diese Aufzählung ist nicht vollständig):
Bodenbearbeitungsaufgaben im Freien wie z.B. Rasen mähen, Vertikutieren, Aerifizieren, Laub sammeln, Garten bewässern, Garten/Rasenfläche düngen, Schnee räumen
Bodenbearbeitungsaufgaben indoor im häuslichen Bereich wie z.B. Staubsaugen, Boden wischen/ wachsen/ polieren
Bodenbearbeitungsaufgaben indoor im öffentlichen/industriellen Bereich wie z.B. Eisflächen präparieren (für Schlittschuhlauf), Boden staubsaugen/ wischen/wachsen/ polieren z.B. in Turn- und Mehrzweckhallen oder in Industriehallen und Kaufhäusern
Generell zur Eingrenzung von Aufenthaltsbereichen für mobile Geräte wie halbautonome und vollautonome Geräte (Roboter).

Auch für nicht autonome oder halbautonome Geräte ist ein Begrenzungssystem folgender Art einsetzbar:
"virtueller Zaun" z.B. für Hunde/Katzen/Kleintiere (Detektor in Hundehalsband)
Diebstahlschutz (z.B. von Fahrzeugen oder Geräten von Firmengeländen, Versuchsfahrzeuge von Testgeländen, Geländefahrzeuge von Offroad-Strecke, Waffen von der Schießanlage, etc.)
als "Elektronische Fußfessel".

## Patentansprüche

1. Verfahren zur Arbeitsbereichserkennung eines mobilen, autonomen oder halbautonomen Arbeitsgerätes (AG), bei dem der dem Arbeitsgerät zugewiesene Arbeitsbereich (AF) von einer als eine elektrische Leiterschleife ausgebildeten Einfassung begrenzt wird und das Arbeitsgerät zur Erkennung des Arbeitsbereiches Signale der Leiterschleife detektiert, wobei ein zusätzliches, nicht leitungsgebundenes, externes Synchronisationssignal (Sync) zur Steuerung des Arbeitsgerätes verwendet wird und wobei das Aussenden des zumindest einen externen Synchronisationssignals (Sync) in einem festen Zeitbezug zu einem Signal I, insbesondere einem Stromsignal, mit dem die elektrische Leiterschleife beaufschlagt wird, erfolgt, **dadurch gekennzeichnet, dass** das zumindest eine externe Synchronisationssignal (Sync) zur Synchronisierung einer Detektion des Arbeitsgerätes, insbesondere zur Synchronisierung einer Signalauswertung des Arbeitsgerätes (AG) zur Detektion der Einfassung genutzt wird.

2. Verfahren nach Anspruch 1, **dadurch gekennzeichnet, dass** das zumindest eine zusätzliche externe Synchronisationssignal (Sync) von einer Basisstation, insbesondere von einer stationären Basisstation zur Erzeugung des Signals I zur Beaufschlagung der elektrischen Leiterschleife, emittiert wird.

3. Verfahren nach Anspruch 2, **dadurch gekennzeichnet, dass** die Basisstation als Ladestation eines oder mehrerer das Arbeitsgerät antreibender Energiespeicher ausgebildet ist.

4. Verfahren nach einem der vorhergehenden Ansprüche, **dadurch gekennzeichnet, dass** das zumindest eine externe Synchronisationssignal (Sync) von einer Schnittstelle (F) des Arbeitsgerätes (AG) detektiert wird.

5. Verfahren nach einem der vorhergehenden Ansprüche, insbesondere nach Anspruch 1, **dadurch gekennzeichnet, dass** ein Testsignal TS generiert wird, welches mit einem bearbeiteten oder nicht bearbeiteten Signal MS der Leiterschleife verarbeitet wird, um die Polarität des Magnetfeldes der Leiterschleife zu bestimmen.

6. Verfahren nach einem der vorhergehenden Ansprüche 1 bis 4, insbesondere nach Anspruch 1, **dadurch gekennzeichnet, dass** eine Impulsauswertung eines bearbeiteten oder nicht bearbeiteten Signals MS der Leiterschleife durchgeführt wird, um die Polarität des Magnetfeldes der Leiterschleife zu bestimmen.

7. Verfahren zumindest nach Anspruch 1, **dadurch gekennzeichnet, dass** das zumindest eine externe Synchronisationssignal (Sync) von dem zu steuernden Arbeitsgerät (AG) emittiert wird.

8. Verfahren nach Anspruch 7, **dadurch gekennzeichnet, dass** das zumindest eine externe Synchronisationssignal (Sync) von einem Signalgenerator (SG) zur Erzeugung von Signalen der Leiterschleife detektiert wird.

9. Verfahren zumindest nach Anspruch 1, **dadurch gekennzeichnet, dass** das zumindest eine zusätzliche externe Synchronisationssignal (Sync) von einer externen Einrichtung emittiert wird.

10. Verfahren nach Anspruch 9, **dadurch gekennzeichnet, dass** die externe Einrichtung ein nicht leitungsgebundenes Signal zur Synchronisierung der Aussendung des Signals I zur Beaufschlagung der elektrischen Leiterschleife sowie eines Detektionsprozesses eines bearbeiteten oder nicht bearbeiteten Signals MS der Leiterschleife durch das Arbeitsgerät sendet.

11. Verfahren zumindest nach Anspruch 1, **dadurch gekennzeichnet, dass** ein Signalgeber (SG) zur Beaufschlagung der elektrischen Leiterschleife mit einem Signal I, als auch des Arbeitsgeräts (AG) über eine gleiche Zeitbasis verfügen.

12. Verfahren nach einem der vorhergehenden Ansprüche 1 bis 10, **dadurch gekennzeichnet, dass** das zumindest eine externe Synchronisationssignal (Sync) mittels Transmittern und/oder Slave-Sendern übertragen wird.

13. Verfahren nach einem der vorhergehenden Ansprüche, **dadurch gekennzeichnet, dass** die Leiterschleife mit einem gepulsten oder einem kontinuierlichen Signal, insbesondere einem kontinuierlichen Sinus/Cosinus-Signal beaufschlagt wird.

14. Verfahren nach einem der vorhergehenden Ansprüche, **dadurch gekennzeichnet, dass** die Leiterschleife mit einem Amplituden- oder Frequenzmodulierten Signal beaufschlagt wird.

15. System zur Arbeitsbereichserkennung eines mobilen Arbeitsgerätes, mit zumindest einer als elektrische Leiterschleife ausgebildeten Einfassung, einem Signalgenerator (SG) zur Erzeugung eines Signals (I) für die Leiterschleife und einem automomen oder halbautonomen, mobilen Arbeitsgerät (AG) mit einer Funkschnittstelle (F2), **dadurch gekennzeichnet, dass** zumindest eine weitere Funkschnittstelle (F1) vorgesehen ist, über die ein Synchronisationssignal (Sync) zwischen dem Signalgenerator (SG) und dem Arbeitsgerät (AG) ausgetauscht werden kann, wobei das Aussenden des Synchronisationssignals (Sync) in einem festen Zeitbezug zu dem Signal (I) erfolgt, mit dem die elektrische Leiterschleife beaufschlagt wird, und wobei das zumindest eine externe Synchronisationssignal (Sync) zur Synchronisierung einer Detektion des Arbeitsgerätes, insbesondere zur Synchronisierung einer Signalauswertung des Arbeitsgerätes (AG) zur Detektion der Einfassung, genutzt wird.

## Claims

1. Method for recognizing the operating range of a mobile, autonomous or semi-autonomous implement (AG), in which the operating range (AF) assigned to the implement is limited by a border formed as an electrical conductor loop, and the implement recognizes the operating range by detecting signals from the conductor loop, an additional, non-wired, external synchronization signal (Sync) being used for controlling the implement, and the at least one external synchronization signal (Sync) being emitted in a fixed time reference with respect to a signal I, particularly a current signal, which is applied to the electrical conductor loop, **characterized in that** the at least one external synchronization signal (Sync) is used for synchronizing detection by the implement, particularly for synchronizing signal evaluation by the implement (AG) for the purpose of detecting the border.

2. Method according to Claim 1, **characterized in that** the at least one additional external synchronization signal (Sync) is emitted by a base station, particularly by a fixed base station, for the purpose of producing the signal I to be applied to the electrical conductor loop.

3. Method according to Claim 2, **characterized in that** the base station is in the form of a charging station for one or more energy stores driving the implement.

4. Method according to one of the preceding claims, **characterized in that** the at least one external synchronization signal (Sync) is detected by an interface (F) of the implement (AG).

5. Method according to one of the preceding claims, particularly according to Claim 1, **characterized in that** a test signal TS is generated which is processed with a processed or unprocessed signal MS from the conductor loop in order to determine the polarity of the magnetic field from the conductor loop.

6. Method according to one of the preceding Claims 1 to 4, particularly according to Claim 1, **characterized in that** pulse evaluation of a processed or unprocessed signal MS from the conductor loop is performed in order to determine the polarity of the magnetic field from the conductor loop.

7. Method according to at least Claim 1, **characterized in that** the at least one external synchronization signal (Sync) is emitted by the implement (AG) which is to be controlled.

8. Method according to Claim 7, **characterized in that** the at least one external synchronization signal (Sync) is detected by a signal generator (SG) for the purpose of producing signals for the conductor loop.

9. Method according to at least Claim 1, **characterized in that** the at least one additional external synchronization signal (Sync) is emitted by an external device.

10. Method according to Claim 9, **characterized in that** the external device sends a non-wired signal for the purpose of synchronizing the emission of the signal I which is to be applied to electrical conductor loop and a detection process for a processed or unprocessed signal MS from the conductor loop by the implement.

11. Method according to at least Claim 1, **characterized in that** a signal generator (SG) for applying a signal I to the electrical conductor loop and the implement (AG) have the same time base.

12. Method according to one of the preceding Claims 1 to 10, **characterized in that** the at least one external synchronization signal (Sync) is transmitted by means of transmitters and/or slave transmitters.

13. Method according to one of the preceding claims, **characterized in that** the conductor loop has a pulsed or continuous signal, particularly a continuous sine/cosine signal, applied to it.

14. Method according to one of the preceding claims, **characterized in that** the conductor loop has an amplitude- or frequency-modulated signal applied to it.

15. System for recognizing the operating range of a mobile implement, having at least one border formed as an electrical conductor loop, a signal generator (SG) for producing a signal (I) for the conductor loop and an autonomous or semi-autonomous, mobile implement (AG) with a radio interface (F2), **characterized in that** at least one further radio interface (F1) is provided which can be used to interchange a synchronization signal (Sync) between the signal generator (SG) and the implement (AG), the synchronization signal (Sync) being emitted in a fixed time reference with respect to the signal I which is applied to the electrical conductor loop, and the at least one external synchronization signal (Sync) being used for synchronizing detection by the implement, particularly for synchronizing signal evaluation by the implement (AG) for the purpose of detecting the border.

## Revendications

1. Procédé de reconnaissance de la zone de travail d'un outillage (AG) mobile, autonome ou semi-autonome, selon lequel la zone de travail (AF) attribuée à l'outillage est délimitée par une bordure réalisée sous la forme d'une boucle conductrice électrique et l'outillage, pour reconnaître la zone de travail, détecte des signaux de la boucle conductrice, un signal de synchronisation externe (Sync) supplémentaire, non filaire, étant utilisé pour la commande de l'outillage et l'émission de l'au moins un signal de synchronisation externe (Sync) s'effectuant dans un rapport temporel fixe avec un signal I, notamment un signal de courant, avec lequel est alimentée la boucle conductrice électrique, **caractérisé en ce que** l'au moins un signal de synchronisation externe (Sync) est utilisé pour la synchronisation d'une détection de l'outillage, notamment pour la synchronisation d'une interprétation du signal de l'outillage (AG) en vue de la détection de la bordure.

2. Procédé selon la revendication 1, **caractérisé en ce que** l'au moins un signal de synchronisation externe (Sync) supplémentaire est émis par une station de base, notamment par une station de base fixe destinée à générer le signal I destiné à alimenter la boucle conductrice électrique.

3. Procédé selon la revendication 2, **caractérisé en ce que** la station de base est réalisée sous la forme d'une station de charge d'un ou plusieurs accumulateurs d'énergie servant à l'entraînement de l'outillage.

4. Procédé selon l'une des revendications précédentes, **caractérisé en ce que** l'au moins un signal de synchronisation externe (Sync) est détecté par une interface (F) de l'outillage (AG).

5. Procédé selon l'une des revendications précédentes, notamment selon la revendication 1, **caractérisé en ce qu'**un signal d'essai TS est généré, lequel est transformé avec un signal MS traité ou non traité de la boucle conductrice afin de déterminer la polarité du champ magnétique de la boucle conductrice.

6. Procédé selon l'une des revendications 1 à 4, notamment selon la revendication 1, **caractérisé en ce qu'**une interprétation des impulsions d'un signal MS traité ou non traité de la boucle conductrice est effectuée afin de déterminer la polarité du champ magnétique de la boucle conductrice.

7. Procédé selon la revendication 1, **caractérisé en ce que** l'au moins un signal de synchronisation externe (Sync) est émis par l'outillage (AG) à commander.

8. Procédé selon la revendication 7, **caractérisé en ce que** l'au moins un signal de synchronisation externe (Sync) est détecté par un générateur de signal (SG) pour générer des signaux de la boucle conductrice.

9. Procédé selon la revendication 1, **caractérisé en ce que** l'au moins un signal de synchronisation externe (Sync) supplémentaire est émis par un équipement externe.

10. Procédé selon la revendication 9, **caractérisé en ce que** l'équipement externe envoie un signal non filaire destiné à la synchronisation de l'émission du signal I destiné à alimenter la boucle conductrice électrique ainsi que d'un un processus de détection d'un signal MS traité ou non traité de la boucle conductrice par l'outillage.

11. Procédé au moins selon la revendication 1, **caractérisé en ce qu'**un générateur de signal (SG), destiné à alimenter la boucle conductrice électrique avec un signal I, ainsi que l'outillage (AG) disposent d'une même base de temps.

12. Procédé selon l'une des revendications 1 à 10, **caractérisé en ce que** l'au moins un signal de synchronisation externe (Sync) est transmis au moyen de transmetteurs et/ou d'émetteurs esclaves.

13. Procédé selon l'une des revendications précédentes, **caractérisé en ce que** la boucle conductrice est alimentée avec un signal impulsionnel ou continu, notamment par un signal sinusoïdal/cosinusoïdal continu.

14. Procédé selon l'une des revendications précédentes, **caractérisé en ce que** la boucle conductrice est alimentée avec un signal modulé en amplitude ou en fréquence.

15. Système de reconnaissance de la zone de travail d'un outillage mobile, comprenant au moins une bordure réalisée sous la forme d'une boucle conductrice électrique, un générateur de signal (SG) pour générer un signal (I) pour la boucle conductrice et un outillage (AG) mobile, autonome ou semi-autonome muni d'une interface hertzienne (F2), **caractérisé en ce qu'**il est prévu au moins une interface hertzienne (F1) supplémentaire par le biais de laquelle un signal de synchronisation (Sync) peut être échangé entre le générateur de signal (SG) et l'outillage (AG), l'émission du signal de synchronisation (Sync) s'effectuant dans un rapport temporel fixe avec le signal (I) avec lequel est alimentée la boucle conductrice électrique, et l'au moins un signal de synchronisation externe (Sync) étant utilisé pour la synchronisation d'une détection de l'outillage, notamment pour la synchronisation d'une interprétation du signal de l'outillage (AG) en vue de la détection de la bordure.
